# NEW EUROPEAN PATENT SPECIFICATION

(11) **EP 1 450 618 B2**
(45) Date of publication and mention of the opposition decision: **06.04.2016**
(45) Mention of the grant of the patent: 01.04.2009
(21) Application number: 02790318.6
(22) Date of filing: 29.10.2002
(51) Int. Cl.: A23G 3/02, A23G 3/20

(54) **CARAMEL MIXTURE AND METHOD FOR MANUFACTURING THEREOF**
KARAMELZUSAMMENSETZUNG UND VERFAHREN ZU DEREN HERSTELLUNG
MELANGE A BASE DE CARAMEL ET PROCEDE DE FABRICATION ASSOCIE

(30) Priority: 29.10.2001 EP 01204144
(43) Date of publication of application: 01.09.2004
(73) Proprietor: Mars Inc., McLean, VA 22101 (US)
(72) Inventor: BOSMA-DE BOER, Margaretha, Mirjam, NL-5251 ZC Vlijmen (NL); HOLL, Wernerus, Jozef, NL-5481 GK Schijndel (NL); HABERS, Marcus, Wilhelmus, Hendrikus, NL-5464 PA Veghel (NL); PETERS, Jasper, Theodoor, NL-4835 NM Breda (NL)
(74) Representative: Carpmaels & Ransford LLP
(86) International application number: PCT/EP2002/012187
(87) International publication number: WO 2003/037101

(56) References cited:
- FR-A- 2 668 334
- US-A- 4 925 380

## Description

The invention relates to a method for manufacturing an edible product which includes caramel. The caramel in this product contains 50-85% by weight sugars or sugar replacers (preferably 60-70% by weight sugars and preferably substantially glucose syrup), 8-20% by weight fats (preferably 10-16% by weight) and 5-18% by weight water (preferably 7-14% by weight). The caramel preferably further comprises 5-10% by weight milk powder.

Although the taste of caramel is generally appreciated, many people do not find the taste sensation of caramel optimal because it is perceived as being too sweet. Caramel is moreover a very sticky substance comparable to syrup, whereby many people do not appreciate caramel. When a product which incorporates caramel is consumed long threads are often formed due to this stickiness which can end up on the body or clothing. Particularly in the case of consumption by small children unhygienic situations can result Furthermore caramel deforms, especially when heated, which generally limits the kinds of products which can be formed of lit to products wherein the caramel is contained in another structure. A further disadvantage is that caramel is a heavy, filling substance, which is generally not consumed in large quantities.

The object of the invention is a tasty caramel product which is simple to produce and which is less sticky, which retains its form better, which has a better taste sensation, which has better digestive properties and/or which has a longer shelf-life.

According to the invention egg white is whipped to an aerated foam for this purpose, whereafter 1 part by weight of foamed egg white is mixed with 8-30 parts by weight of caramel at a temperature of 80-130°C (preferably 100-120°C) such that an aerated caramel mixture is obtained. In the context of this invention the term "egg white" includes a re-hydrated egg white powder solution.

Owing to the foamed egg white, air bubbles are introduced into the caramel whereby the product has a good taste sensation, and whereby the caramel also loses the syrupy stickiness which is so characteristic and which is undesirable in the intended applications of the product. Owing to the high temperature of the caramel the egg white coagulates (solidifies) into a stable matrix, whereby the product retains its form and thereby has a long storage life. If the temperature of the caramel is too low, this coagulation does not take place, while if the temperature is too high the caramel or the egg white bums.

The egg white is preferably mixed with 10-30% by weight of water prior to whipping and there is preferably also then a wait of at least 10 hours (preferably at least 20 hours) before the egg white is whipped, during which period the egg white (partly) hydrates, whereby a better result is achieved. Furthermore, sugar syrup is added to the egg white. Other additions to the egg white that improve stability may include gelatine and/or milk powder. A good aerated result is obtained if the egg white is whipped to form the foam with a density of 0.08-0.16 g/cm³ (more preferably 0.10-0.14 g/cm³).

The foamed egg white and the caramel are mixed by being pressed together through a static mixer, for instance a Sulzer™ SMX mixer, preferably at a pressure of 1-15 Bar. Such a static mixer comprises a tube having therein a labyrinth of mixing elements through which the mixture is pressed by means of a pump, so that the ingredients are mixed in cautious manner, and whereby the aerated structure is retained. The egg white itself is preferably whipped until aerated in a so-called Mondo™ mixer, which consists of a vessel having therein a shaft rotating at high speed (roughly 1100 revolutions per minute) which is provided with radially extending pins.

The invention further relates to an edible product, comprising an aerated caramel mixture which is manufactured by means of the method according to the invention. In a first preferred embodiment the aerated caramel mixture is herein encased by a layer of chocolate or sugar. The product further preferably comprises a biscuit and/or one or more pieces of nougat, nuts, butter or ice-cream. In a second preferred embodiment the aerated caramel mixture encases a core with peppermint or liquorice extract. In athird preferred embodiment the aerated caramel mixture is encased by a product comprising liquorice extract (Dutch "drop"). In a fourth preferred embodiment the aerated caramel has the consistency of a spread, so that it may be used in a sandwich.

The invention furthermore relates to a container containing the aerated caramel mixture according to the invention, which can for instance serve as bread spread. In a particular preferred embodiment the containerfurther comprises chocolate spread, wherein the caramel and the chocolate spread are distributed in the container in a manner comparable to the known product Duo Penotti^{®} from the manufacturer Penotti.

The invention will now be further elucidated with reference to a preferred embodiment

Placed in a vessel is a mixture of egg white, water and a small part sugar syrup. The mixture has a temperature of about 20°C and a total moisture content of about 40% (this is achieved by adding roughly 20% by weight water). The mixture is then left for 24 hours, during which period hydration of the egg white occurs, i.e. water molecules are bonded to the egg white molecules. The egg white mixture is subsequently whipped at a rotation speed of about 1100 rpm until a foamy mass is created with a density of about 0.12 g/cm³.

In addition, caramel with a total moisture content of about 11.6% by weight is maintained in a vessel at a temperature of roughly 105°C. The composition of the caramel is as follows:

| | |
|---|---|
| Sugar | 18,2% by weight |
| Glucose syrup | 57.0% by weight |
| Fat | 10.0% by weight |
| Skimmed milk powder | 8.2% by weight |
| Lactose | 1.0% by weight |
| Whey powder | 0.7% by weight |
| Milk fat | 3.1 % by weight |
| Salt | 0.6% by weight |
| Water | 1.2% by weight |

The sugar in the caramel may be replaced by low calorie or non-cariogenic sugar replacers.

The liquid caramel is guided through a conduit to a static Sulzer SMX™ by means of a pump. Before the caramel is guided into the static mixer the prepared foamed egg white Is added in a predetermined ratio. Practical tests have been carried outwith ratios of foamed egg white/caramel lying between 1:4 and 1:40, and at all these ratios a stable and usable result was achieved. Stable is understood to mean that the aerated structure is also retained after a long period of time, and a usable result is understood to mean a caramel product which at least largely achieves the objectives stated in the introduction.

Owing to the pressure of said pump the ingredients are subsequently pressed through the static mixer, whereby the caramel and the foamed egg white are mixedtogether in controlled manner, wherein the aerated structure of the egg white is retained and is incorporated in the caramel. If a non-static mixer were to be used with for instance a high rotation speed, there would then be the danger of the aerated structure being destroyed.

When the caramel product reaches the end of the static mixer, expansion takes place, after which the product has a density between 0.3 and 1.3 g/cm³ and a temperature of about 95°C, at which temperature the egg white coagulates and a stable matrix structure forms in the caramel mixture. The product is now ready to be processed into products such as confectionery or biscuits. The product is per se also very suitable as for instance bread spread.

Although the invention is described above on the basis of an embodiment, it will be apparent to the skilled person that many variations are possible. The scope of the present invention should not therefore be limited by the details of this embodiment.

## Claims

1. Method for manufacturing an edible product, wherein caramel is manufactured which contains 50-85% by weight sugars or sugar replacers, 8-20% by weight fats and 7-18% by weight water, **characterized in that** sugar syrup is added to egg white and the egg white is whipped to an aerated foam, whereafter 1 part by weight of foamed egg white is mixed with 8-30 parts by weight of caramel at a temperature of 80-130°C such that an aerated caramel mixture is obtained, wherein the foamed egg white and the caramel are mixed by being pressed together through a static mixer.

2. Method as claimed in claim 1, **characterized in that** the egg white is mixed with 10-30% by weight of water at least 10 hours prior to whipping.

3. Method as claimed in claims 1 or 2, **characterized in that** the egg white is whipped until the foam has a density of 0.08-0.16g/cm³.

4. Method as claimed in any of the foregoing claims 1-3, **characterized in that** the caramel contains 60-70% by weight sugars or sugar replacers.

5. Method as claimed in any of the foregoing claims 1-4, **characterized in that** the sugars In the caramel substantially comprise glucose syrup.

6. Method as claimed in any of the foregoing claims 1-5, **characterized in that** the caramel further contains 5-10% by weight milk powder.

7. Method as claimed in any of the foregoing claims 1-6, **characterized in that** during mixing the caramel has a temperature of 100-120°C.

8. Edible product, comprising an aerated caramel mixture which is manufactured by means of the method as claimed in any of the foregoing claims 1-7.

9. Edible product as claimed in claim 8, **characterized in that** the aerated caramel mixture is encased by a layer of chocolate or sugar.

10. Edible product as claimed in claim 9, **characterized in that** it further comprises a biscuit,

11. Edible product as claimed In claim 8 or 9, **characterized in that** it further comprises one or more pieces of nougat, nuts, butter or ice-craem.

12. Edible product as claimed in claim 8, **characterized In that** the aerated caramel mixture encases a core with peppermint or liquorice extract.

13. Edible product as claimed in claim 8, **characterized In that** the aerated caramel mixture is encased by a product comprising liquorice extract.

14. Edible product as claimed in claim 8, wherein the aerated caramel has the consistency of a spread.

15. Container containing an aerated caramel mixture which is manufactured by means of the method as claimed in any of the foregoing claims 1-7.

16. Container as claimed in claim 15, **characterized in that** the container further contains chocolate spread.

## Patentansprüche

1. Verfahren zur Herstellung eines essbaren Produktes, bei dem Karamell hergestellt wird, der 50-85 Gew.-% Zucker oder Zuckerersatzstoffe, 8-20 Gew.-% Fette und 7-18 Gew.-% Wasser enthält, **dadurch gekennzeichnet, dass** Zuckersirup zum Eiklar zugegeben wird und das Eiklar zu einem mit Luft versetzten Schaum geschlagen wird, woraufhin 1 Gewichtsteil geschäumtes Eiklar mit 8-30 Gewichtsteilen Karamell bei einer Temperatur von 80-130°C so gemischt wird, dass eine mit Luft versetzte Karamellmischung erhalten wird, wobei das geschäumte Eiklar und der Karamell vermischt werden, indem sie zusammen durch einen statischen Mischer gedrückt werden.

2. Verfahren nach Anspruch 1, **dadurch gekennzeichnet, dass** das Eiklar wenigstens 10 Stunden vor dem Schlagen mit 10-30 Gew.-% Wasser vermischt wird.

3. Verfahren nach Anspruch 1 oder 2, **dadurch gekennzeichnet, dass** das Eiklar geschlagen wird, bis der Schaum eine Dichte von 0,08-0,16 g/cm³ aufweist.

4. Verfahren nach einem der vorangehenden Ansprüche 1-3, **dadurch gekennzeichnet, dass** der Karamell 60-70 Gew.-% Zucker oder Zuckerersatzstoffe enthält.

5. Verfahren nach einem der vorangehenden Ansprüche 1-4, **dadurch gekennzeichnet, dass** die Zucker im Karamell im wesentlichen Glucosesirup umfassen.

6. Verfahren nach einem der vorangehenden Ansprüche 1-5, **dadurch gekennzeichnet, dass** der Karamell weiter 5-10 Gew.-% Milchpulver enthält.

7. Verfahren nach einem der vorangehenden Ansprüche 1-6, **dadurch gekennzeichnet, dass** während des Mischens der Karamell eine Temperatur von 100-120°C aufweist.

8. Essbares Produkt, das eine mit Luft versetzte Karamellmischung umfasst, die mittels des Verfahrens nach einem der vorangehenden Ansprüche 1-7 hergestellt ist.

9. Essbares Produkt nach Anspruch 8, **dadurch gekennzeichnet, dass** die mit Luft versetzte Karamellmischung von einer Schicht aus Schokolade oder Zucker umschlossen ist.

10. Essbares Produkt nach Anspruch 9, **dadurch gekennzeichnet, dass** es weiter einen Biskuit umfasst.

11. Essbares Produkt nach Anspruch 8 oder 9, **dadurch gekennzeichnet, dass** es weiter ein oder mehrere Stücke Nougat, Nüsse, Butter oder Eiskreme umfasst.

12. Essbares Produkt nach Anspruch 8, **dadurch gekennzeichnet, dass** die mit Luft versetzte Karamellmischung einen Kern mit Pfefferminz- oder Lakritzextrakt umschließt.

13. Essbares Produkt nach Anspruch 8, **dadurch gekennzeichnet, dass** die mit Luft versetzte Karamellmischung von einem Produkt umschlossen ist, das Lakritzextrakt umfasst.

14. Essbares Produkt nach Anspruch 8, wobei der mit Luft versetzte Karamell die Konsistenz eines Aufstrichs besitzt.

15. Behälter, der eine mit Luft versetzte Karamellmischung enthält, die mittels des Verfahrens nach einem der vorangehenden Ansprüche 1-7 hergestellt ist.

16. Behälter nach Anspruch 15, **dadurch gekennzeichnet, dass** der Behälter weiter Schokoladenaufstrich enthält.

## Revendications

1. Procédé de fabrication d'un produit comestible, dans lequel du caramel est fabriqué, contenant 50-85% en poids de sucres ou de succédanés de sucre, 8-20% en poids de matières grasses et 7-18% en poids d'eau, **caractérisé en ce que** du sirop de sucre est ajouté à du blanc d'oeuf et le blanc d' oeuf est battu en une neige aérée, puis 1 partie en poids de blanc d'oeuf battu en neige est mélangée avec 8-30 parties en poids de caramel à une température de 80-130°C de telle sorte qu'un mélange de caramel aéré est obtenu, le blanc d'oeuf en neige et le caramel étant mélangés en étant pressés ensemble dans un mélangeur statique.

2. Procédé selon la revendication 1, **caractérisé en ce que** le blanc d'oeuf est mélangé avec 10-30% en poids d'eau au moins 10 heures avant le fouettage.

3. Procédé selon la revendication 1 ou 2, **caractérisé en ce que** le blanc d'oeuf est battu jusqu'à ce que la neige ait une densité de 0,08-0,16 g/cm3.

4. Procédé selon l'une quelconque des revendications précédentes 1 à 3, **caractérisé en ce que** le caramel contient de 60-70% en poids de sucres ou de succédanés de sucre.

5. Procédé selon l'une quelconque des revendications précédentes 1 à 4, **caractérisé en ce que** les sucres dans le caramel comprennent substantiellement du sirop de glucose.

6. Procédé selon l'une quelconque des revendications précédentes 1 à 5, **caractérisé en ce que** le caramel contient en outre 5-10% en poids de poudre de lait.

7. Procédé selon l'une quelconque des revendications précédentes 1 à 6, **caractérisé en ce que** pendant le mélange le caramel a une température de 100-120°C.

8. Produit comestible, comprenant un mélange de caramel aéré fabriqué par le procédé selon l'une quelconque des revendications précédentes 1 à 7.

9. Produit comestible selon la revendication 8, **caractérisé en ce que** le mélange de caramel aéré est enrobé par une couche de chocolat ou de sucre.

10. Produit comestible selon la revendication 9, **caractérisé en ce qu'**il comprend en outre un biscuit.

11. Produit comestible selon la revendication 8 ou 9, **caractérisé en ce qu'**il comprend en outre un ou plusieurs morceaux de nougat, de noisettes, de beurre ou de crème glacée.

12. Produit comestible selon la revendication 8, **caractérisé en ce que** le mélange de caramel aéré enrobe un coeur avec un extrait de menthe poivrée ou de réglisse.

13. Produit comestible selon la revendication 8, **caractérisé en ce que** le mélange de caramel aéré est enrobé par un produit comprenant un extrait de réglisse.

14. Produit comestible selon la revendication 8, dans lequel le caramel aéré a la consistance d'un produit à tartiner.

15. Contenant comprenant un mélange de caramel aéré fabriqué par le procédé selon l'une quelconque des revendications précédentes 1 à 7.

16. Contenant selon la revendication 15, **caractérisé en ce que** le contenant comprend en outre du chocolat à tartiner.
